# EUROPEAN PATENT SPECIFICATION

(11) **EP 1 197 080 B1**
(45) Date of publication and mention of the grant of the patent: **17.09.2003**
(21) Application number: 00948656.4
(22) Date of filing: 13.07.2000
(51) Int. Cl.: H04N 5/52

(54) **METHOD AND APPARATUS FOR PROVIDING DUAL AUTOMATIC GAIN CONTROL DELAY SETTINGS IN A TELEVISION RECEIVER**
VORRICHTUNG UND VERFAHREN ZUR BEREITSTELLUNG VON DUALEN AUTOMATISCHEN VERSTÄRKUNGSREGELUNGSVERZÖGERUNGSEINSTELLUNGEN IN EINEM FERNSEHEMPFÄNGER
PROCEDE ET DISPOSITIF PERMETTANT UN DOUBLE REGLAGE DE RETARD DE COMMANDE AUTOMATIQUE DE GAIN DANS UN TELEVISEUR

(30) Priority: 16.07.1999 US 144423 P
(43) Date of publication of application: 17.04.2002
(73) Proprietor: Thomson Licensing S.A., 92648 Boulogne Cedex (FR)
(72) Inventor: HUTCHINSON, Daniel, Mark, Carmel, IN 46032 (US); GRUBBS, Gary, Dean, Indianapolis, IN 46234 (US); MAYER, Matthew, Thomas, Indianapolis, IN 46250 (US); HARO, Ricardo, Indianapolis, IN 46250 (US)
(74) Representative: Bonnans, Arnaud
(86) International application number: US0019115
(87) International publication number: WO01006777

(56) References cited:
- EP-A- 0 944 255
- US-A- 5 659 372
- US-A- 5 982 457
- PATENT ABSTRACTS OF JAPAN vol. 1999, no. 09, 30 July 1999 (1999-07-30) & JP 11 098426 A (SAMSUNG ELECTRON CO LTD), 9 April 1999 (1999-04-09)

## Description

This invention relates to a television receiver capable of receiving analog and digital television signals. In particular, the invention is directed to improving the reception of digital television signals.

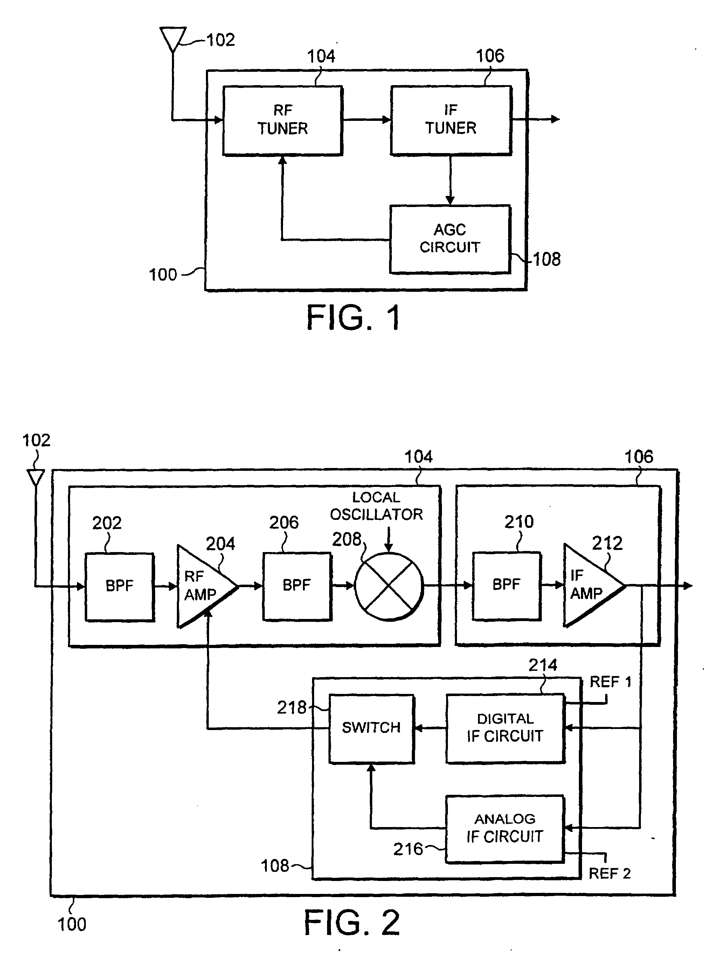

In order to facilitate the transition from conventional analog television systems to digital television systems, current television receivers are capable of receiving and processing both analog television signals, e.g., National Television Standard Committee (NTSC) television signals, and digital television signals, e.g., high definition television (HDTV) signals. FIG. 1 depicts a high level block diagram of a tuner portion 100 of such a television receiver. An exemplary television receiver is disclosed in U.S. Patent Application Serial No. 09/140,257, filed August 26, 1998, which is herein incorporated by reference.

The tuner portion 100 comprises an antenna 102, a radio frequency (RF) tuner 104, an intermediate frequency (IF) module 106 and an automatic gain control (AGC) circuit 108. A RF modulated input television signal is received at the antenna 102 or other input terminal such as a cable television set top box, satellite television set top box and the like. The input television signal may comprise either an analog NTSC television signal or a digital HDTV television signal. The RF tuner 104 tunes the input television signal for a particular channel and down converts the input television signal to an IF television signal. The IF tuner 106 converts the IF television signal into a downstream, baseband television signal. The AGC circuit 108 receives the baseband television signal and derives an AGC control signal coupled to an amplifier in the RF tuner 104. The gain of the RF tuner 104 is adjusted in response to the AGC control signal.

Patent application JP 11-098 426 describes a television receiver with a tuner for receiving analogue and digital signals. A switching section selects either an analogue AGC control signal or a digital AGC control signal as the control signal for the tuner.

However, the transition from analog television systems to digital television systems requires using additional bandwidth in the existing terrestrial television spectrum. Each television broadcast station is allocated an additional broadcast channel to transmit the HDTV television signal or multiple standard definition digital signals. This channel requires usage of additional bandwidth over the currently allocated bandwidth utilized to transmit analog NTSC television signals. With these additional channels, the broadcast television signal is more susceptible to cross-modulation and inter-modulation distortion. As such, the television receiver must improve its linearity performance in view of distortion associated with the input television signal.

Therefore, a need exists in the art to improve the reception of television signals.

### SUMMARY OF THE INVENTION

The present invention provides a method and apparatus for processing a received television signal comprising one of a first type of television signal and a second type of television signal. Specifically, the method comprises amplifying said received television signal in response to a control signal. If the received television signal comprises the first type of television signal, the RF amplifier gain changes when said received television signal exceeds a first signal level. If the received television signal comprises the second type of television signal, the RF amplifier gain changes when said received television signal exceeds a second signal level. The second signal level is greater than said first signal level. A concomitant apparatus is also provided. As the first signal level is lower for the first type of television signal, reception of the first type of television signal is improved.

### BRIEF DESCRIPTION OF THE DRAWINGS

The teachings of the present invention can be readily understood by considering the following detailed description in conjunction with the accompanying drawings, in which:
FIG. 1 depicts a high level block diagram of a tuner portion of a television receiver capable of receiving both analog and digital television signals; and
FIG. 2 depicts a more detailed block diagram of the tuner portion of FIG. 1 in accordance with the present invention.

To facilitate understanding, identical reference numerals have been used, where possible, to designate identical elements that are common to the figures.

### DETAILED DESCRIPTION

FIG. 2 depicts a more detailed block diagram of the tuner portion 100 of FIG. 1 in accordance with the present invention. Specifically, the RF tuner 104 comprises a first bandpass filter 202, a RF amplifier 204, a second bandpass filter 206 and a mixer 208. The first bandpass filter 202 allows or passes the input television signal within a frequency range defined by a selected television channel. The RF amplifier 204 amplifies the signal level or amplitude of the filtered television signal in response to a control signal, e.g., an automatic gain control (AGC) signal, from an AGC circuit 108. After filtering the amplified television signal with the second bandpass filter 206, the mixer 208 uses a local oscillator to convert the input television signal into an intermediate frequency (IF) television signal. The frequency of the local oscillator is generally dependent on the selected television channel.

The IF tuner 106 comprises a bandpass filter 210 and an IF amplifier 212. The bandpass filter 210 passes the IF television signal within an IF range. The filtered signal is amplified by the IF amplifier 212 prior to being converted into a baseband television signal using a mixer (not shown). Once the IF television signal is converted into baseband, the television signal is sent downstream for further processing in other portions of the television receiver not shown. The baseband television signal is also coupled to the AGC circuit 108.

In the context of the present invention, the RF amplifier 204 amplifies the television signal to optimize the trade-off between the signal to noise ratio (SNR) and distortion at the television receiver. The television signal is amplified by adjusting the gain of the RF amplifier in response to an AGC signal from the AGC circuit 108. To achieve an acceptable SNR at the television receiver, the signal level of the amplified television signal, i.e., at the mixer 208 input, must be high enough to overcome the noise figure of the mixer 208 and other downstream circuits. However, the signal level of the amplified television signal must also be low enough to avoid distortion from the linearity limitation of the mixer and other downstream circuits.

Thus, at low signal levels of the input television signal, the television signal is amplified at the maximum gain of the RF amplifier 204. The signal level of the amplified television signal is increased at maximum gain until reaching an optimal signal level at the mixer 208 input. Once the optimal signal level of the television signal is reached, the gain of the RF amplifier 204 is reduced, in order to maintain this optimal signal level. The signal level at which the gain of the RF amplifier 104 is reduced is the RF AGC Delay Point.

Significant differences exist between analog NTSC and digital HDTV television signals in the SNR required to demodulate and provide noise free video in the television receiver. For the analog NTSC television signal, the output from the tuner portion 100 must have a SNR of at least 50 decibels (dB) to present downstream video with a noise free picture. However, for the digital HDTV television signal, the output from the tuner portion 100 only requires a SNR of greater than approximately 17 dB to present a downstream noise free picture. As such, gain reduction of the RF tuner 104 may occur at a much lower signal level for digital television signals than for analog television signals. Namely, the RF AGC Delay Point for digital television signals can be provided at a much lower signal level than the RF AGC Delay Point for analog television signals.

The cross-modulation and inter-modulation performance of the RF tuner 104 improves when the gain of the RF tuner 104 is reduced. Namely, as the gain of the RF tuner 104 is reduced, a higher input signal level is required to produce a certain level of cross-modulation and inter-modulation distortion. In one such television system, the cross-modulation performance of the RF tuner 104 has been empirically determined to improve at least 1 dB for every 1 dB of reduction in the gain of the RF tuner 104.

To advantageously utilize the lower RF AGC Delay Point of digital television signals, the present invention implements dual RF AGC Delay Points for digital and analog television signals. By implementing a lower RF AGC Delay Point for digital television signals, gain reduction starts at a lower signal level of the digital television signal. As the RF amplifier 204 is operating at a lower gain for digital television signals, the cross-modulation performance, i.e., the linearity performance of the tuner portion 100 to cross-modulation and inter-modulation distortion, is significantly improved for digital television signals.

Returning to FIG. 2, the AGC circuit 108 receives the baseband television signal and generates an AGC signal coupled to the RF amplifier 204. The AGC circuit 108 implements dual RF AGC Delay Points in accordance with the present invention. Specifically, the AGC circuit 108 comprises a digital IF circuit 214, an analog IF circuit 216 and a switch 218. The AGC signal is provided by the digital IF circuit 214 if the received input television signal comprises a digital HDTV television signal. Alternatively, the AGC signal is provided by the analog IF circuit 216 if the received input television signal comprises an analog NTSC television signal. The AGC signal is routed to the RF amplifier 204 from either the analog IF circuit 216 or the digital IF circuit 218 via the switch 218.

In the context of the present invention, a first reference level, REF. 1, is provided to configure the RF AGC Delay Point of the digital television signal. Once the first reference level, REF. 1, is selected, the digital IF circuit 214 decreases the value of the AGC control signal when the signal level of the amplified input television signal exceeds a first signal level, i.e., the AGC Delay Point of the digital television signal. In response to the decreased AGC control signal, the gain of the RF amplifier 204 is decreased, thereby amplifying the input television signal to a lower level. The gain of the RF amplifier 204 is also increased when the AGC control signal is increased by the digital IF circuit 214.

In a similar manner, a second reference level, REF. 2, is provided to configure the RF AGC Delay Point of the analog television signal. Once the second reference level, REF. 2, is selected, the analog IF circuit 216 decreases the level of the AGC control signal when the signal level of the amplified input television signal exceeds a second signal level, i.e., the AGC Delay Point of the analog television signal. The AGC Delay Point of the analog television signal is generally set higher than the AGC Delay Point of the digital television signal in accordance with the present invention. As with digital television signals, however, the gain of the RF amplifier 204 is decreased in response to the decreased AGC signal, thereby amplifying the input television signal to a lower level. The gain of the RF amplifier 204 is also increased when the AGC control signal is increased by the analog IF circuit 216.

As a much lower SNR is required to produce a noise free picture from the digital television signal, the RF AGC Delay Point is generally much lower for digital television signals than for analog television signals. In one such television system, the RF AGC Delay Point, e.g., the point where gain reduction would begin, was empirically determined to occur when the signal level of the input television signal is approximately -59 dBm (dBm: decibels referenced to one milliwatt) for digital HDTV television signals. In contrast, the RF AGC Delay Point was empirically determined at approximately -49 dBm for analog NTSC television signals. Thus, the tuner portion 100 initiates gain reduction approximately 10 dB earlier for digital television signals.

In another embodiment of the present invention, the gain of the RF tuner 104 can be dynamically reduced based upon an estimate of the input television signal. By dynamically reducing the gain of the RF tuner 104, the linearity performance of the tuner portion 100 is improved when terrestrial digital television signals are received in the presence of adjacent channel interference. Specifically, in order to choose the best compromise between noise and linearity performance, the gain of the RF tuner 104 can be dynamically adjusted based upon an estimate of the amplitude or signal level of the desired and interfering input signal levels. The estimate of the input signal level is determined by measuring voltage level of the control signal, e.g., the RF AGC signal, using an aligned AGC Delay Point and a predetermined tuner gain curve.

Although various embodiments which incorporate the teachings of the present invention have been shown and described in detail herein, those skilled in the art can readily devise many other varied embodiments that will still incorporate these teachings.

## Claims

1. Method for processing a received television signal comprising one of a first type of television signal and a second type of television signal, the method comprising:
amplifying said received television signal in response to a control signal, where said amplifying occurs when said received television signal exceeds a first signal level (REF 1) if said received television signal comprises the first type of television signal, said amplifying occurs when said received television signal exceeds a second signal level (REF 2) if said received television signal comprises the second type of television signal, wherein said second signal level (REF 2) is greater than said first signal level (REF 1).

2. The method of claim 1 wherein the first type of television signal comprises a digital television signal and the second type of television signal comprises an analog television signal.

3. The method of claim 2 wherein said digital television signal comprises a high definition television (HDTV) signal and said analog television signal comprises a National Television Standard Committee (NTSC) television signal.

4. The method of claim 1 further comprising:
- sending said received television signal downstream for further processing upon amplifying said received television signal.

5. The method of claim 1 further comprising:
- amplifying said received television signal up to the first signal level and prior to said amplifying in response to said control signal if said received television signal comprises the first type of television signal television signal, where said amplifying up to the first signal is performed at a higher amplification level than said amplifying in response to said control signal.

6. The method of claim 1 further comprising:
- amplifying said received television signal up to the second signal level and prior to said amplifying in response to said control signal if said received television signal comprises said second type of television signal, where said amplifying up to the first signal level is performed at a higher amplification level than said amplifying in response to said control signal.

7. The method of claim 1 wherein said first signal level represents an automatic gain control (AGC) delay point of the first type of television signal and said second signal level represents the AGC delay point of the second type of television signal.

8. The method of claim 7 wherein the AGC delay point of the first type of television signal is less than the AGC delay point of the second type of television signal.

9. The method of claim 1 wherein said amplifying comprises:
- decreasing a value of said control signal when said received television signal exceeds a first signal level if the received television signal comprises the first type of television signal, where the amplifying occurs in response to the decreased value of said control signal.

10. The method of claim 1 wherein said amplifying comprises:
- decreasing a value of said control signal when said received television signal exceeds a second signal level if the received television signal comprises
- the second type of television signal, where the amplifying occurs in response to the decreased value of said control signal.

11. The method of claim 1 wherein said amplifying comprises:
- decreasing a gain of a radio frequency (RF) tuner processing said received television signal.

12. The method of claim 11 wherein the gain of the RF tuner is dynamically reduced based on an estimated signal level of said received television signal.

13. The method of claim 12 further comprising :
- measuring a value of said control signal from said first signal level and a gain curve of the RF tuner; and
- determining said estimated signal level from the value of said control signal.

14. The method of claim 1 wherein said control signal comprises an AGC signal provided from an intermediate frequency (IF) AGC circuit.

15. The method of claim 1 wherein said amplifying occurs to maintain the signal level of said amplified television signal at the first signal level if said received television signal comprises the first type of television signal, and said amplifying occurs to maintain the signal level of said amplified television signal at the second signal level if said received television signal comprises the second type of television signal.

16. An apparatus for processing a received television signal comprising one of a first type of television signal and a second type of television signal, the apparatus comprising:
- a radio frequency (RF) tuner (104) for receiving said received television signal and amplifying said received television signal in response to a decreased value of a control signal; and
- an automatic gain control (AGC) circuit (108), coupled to said RF tuner (104), for adjusting said control signal to said RF tuner (104), where the value of said control signal is decreased when said received television signal exceeds a first signal level if said received television signal comprises the first type of television signal, the value of said control signal is decreased when said received television signal exceeds a second signal level if received television signal comprises the second type of television signal, wherein said second signal level is greater than said first signal level.

17. The apparatus of claim 16 wherein the first type of television signal comprises a digital television signal and the second type of television signal comprises an analog television signal.

18. The apparatus of claim 16 further comprising :
- an intermediate frequency (IF) tuner (104), coupled to said RF tuner (104) and said ACG circuit, for receiving an IF television signal from said RF tuner, converting said IF television signal into a baseband television signal, and providing said baseband television signal to said AGC circuit (108) and downstream for further video processing.

19. The apparatus of claim 16 wherein said RF tuner (104) comprises:
- a RF amplifier (204) for amplifying said received television signal in response to a decreased value of a control signal.

20. The apparatus of claim 16 wherein said AGC circuit comprises:
- a digital IF circuit (214) for decreasing the value of said control signal when said received television signal exceeds a first signal level if said received television signal comprises the first type of television signal; and
- an analog IF circuit (214) for decreasing the value of said control signal when said received television signal exceeds a second signal level if received television signal comprises the second type of television signal.

21. The apparatus of claim 16 wherein said first signal level represents an automatic gain control (AGC) delay point of the first type of television signal and said second signal level represents the AGC delay point of the second type of television signal.

22. The apparatus of claim 21 wherein the AGC delay point of the first type of television signal is less than the AGC delay point of the second type of television signal.

## Patentansprüche

1. Verfahren zur Verarbeitung eines empfangenen Fernsehsignals mit einem ersten oder einem zweiten Femsehsignaltyp mit:
Verstärkung des empfangenen Fernsehsignals in Abhängigkeit von einem Steuersignal, wobei die Verstärkung erfolgt, wenn das empfangene Fernsehsignal einen ersten Signalwert (REF 1) übersteigt, wenn das empfangene Fernsehsignal den ersten Fernsehsignaltyp enthält, die Verstärkung erfolgt, wenn das empfangene Fernsehsignal einen zweiten Signalwert (REF 2) übersteigt, wenn das empfangene Fernsehsignal den zweiten Fernsehsignaltyp enthält, wobei der zweite Signalwert (REF 2) größer als der erste Signalwert (REF 1) ist.

2. Verfahren nach Anspruch 1, wobei der erste Fernsehsignaltyp ein digitales Fernsehsignal und der zweite Fernsehsignaltyp ein analoges Fernsehsignal enthält.

3. Verfahren nach Anspruch 2, wobei das digitale Fernsehsignal ein hochauflösendes Fernsehsignal (HDTV) und das analoge Fernsehsignal ein National Television Standard Committee (NTSC)-Fernsehsignal enthält.

4. Verfahren nach Anspruch 1 mit:
- Sendung des empfangenen Fernsehsignals in Signalflußrichtung zur weiteren Verarbeitung für die Verstärkung des empfangenen Fernsehsignals.

5. Verfahren nach Anspruch 1 mit:
- Verstärkung des empfangenen Fernsehsignals bis auf den ersten Signalwert und vor der Verstärkung in Abhängigkeit von dem Steuersignal, wenn das empfangene Fernsehsignal den ersten Femsehsignaltyp enthält, wobei die Verstärkung bis zu dem ersten Signal bei einem höheren Verstärkungswert erfolgt als die Verstärkung in Abhängigkeit von dem Steuersignal.

6. Verfahren nach Anspruch 1 mit:
- Verstärkung des empfangenen Fernsehsignals bis auf den zweiten Signalwert und vor der Verstärkung in Abhängigkeit von dem Steuersignal, wenn das empfangene Fernsehsignal den zweiten Femsehsignaltyp enthält, wobei die Verstärkung bis zu dem ersten Signalwert bei einem höheren Verstärkungswert erfolgt als die Verstärkung in Abhängigkeit von dem Steuersignal.

7. Verfahren nach Anspruch 1, wobei der erste Signalwert einen automatischen Verstärkungssteuerung (AGC)-Verzögerungspunkt des ersten Femsehsignaltyps und der zweite Signalwert den AGC-Verzögerungspunkt des zweiten Fernsehsignaltyps darstellt.

8. Verfahren nach Anspruch 7, wobei der AGC-Verzögerungspunkt des ersten Fernsehsignaltyps kleiner als der AGC-Verzögerungspunkt des zweiten Fernsehsignaltyps ist.

9. Verfahren nach Anspruch 1, wobei die Verstärkung folgendes enthält:
- Verringerung des Wertes des Steuersignals, wenn das empfangene Fernsehsignal einen ersten Signalwert übersteigt, wenn das empfangene Fernsehsignal den ersten Fernsehsignaltyp enthält, wobei die Verstärkung in Abhängigkeit von dem verringerten Wert des Steuersignals erfolgt.

10. Verfahren nach Anspruch 1, wobei die Verstärkung folgendes enthält:
- Verringerung des Wertes des Steuersignals, wenn das empfangene Femsehsignal einen zweiten Signalwert übersteigt, wenn das empfangene Fernsehsignal folgendes enthält:
- den zweiten Fernsehsignaltyp, wo die Verstärkung in Abhängigkeit von dem verringerten Wert des Steuersignals erfolgt.

11. Verfahren nach Anspruch 1, wobei die Verstärkung folgendes enthält:
- Verringerung der Verstärkung eines Hochfrequenz (HF)-Tuners, der das empfangene Fernsehsignal verarbeitet.

12. Verfahren nach Anspruch 11, wobei die Verstärkung des HF-Tuners aufgrund eines geschätzten Signalwerts des empfangenen Fernsehsignals dynamisch verringert wird.

13. Verfahren nach Anspruch 12 mit:
- Messung des Wertes des Steuersignals von dem ersten Signalwert und einer Verstärkungskurve des HF-Tuners und
- Bestimmung des geschätzten Signalwertes aus dem Wert des Steuersignals.

14. Verfahren nach Anspruch 1, wobei das Steuersignal ein AGC-Signal ist, das von einer Zwischenfrequenz (ZF)-AGC-Schaltung geliefert wird.

15. Verfahren nach Anspruch 1, wobei die Verstärkung dafür erfolgt, den Signalwert des verstärkten Fernsehsignals bei dem ersten Signalwert zu halten, wenn das empfangene Fernsehsignal den ersten Fernsehsignaltyp enthält, und die Verstärkung dafür erfolgt, um den Signalwert des verstärkten Fernsehsignals bei dem zweiten Signalwert zu halten, wenn das empfangene Fernsehsignal den zweiten Femsehsignaltyp enthält.

16. Vorrichtung zur Verarbeitung eines empfangenen Femsehsignals, das einen ersten Femsehsignaltyp oder einen zweiten Fernsehsignaltyp enthält, mit:
- einem Hochfrequenz (HF)-Tuner (104) zum Empfang des empfangenen Fernsehsignals und zur Verstärkung des empfangenen Fernsehsignals in Abhängigkeit von einem verringerten Wert eines Steuersignals und
- einer automatischen Verstärkungssteuerung (AGC)-Schaltung (108), die mit dem HF-Tuner (104) verbunden ist, zur Einstellung des Steuersignals zu dem HF-Tuner (104), wo der Wert des Steuersignals verringert wird, wenn das empfangene Fernsehsignal einen ersten Signalwert übersteigt, wenn das empfangene Fernsehsignal den ersten Femsehsignaltyp enthält, dass der Wert des Steuersignals verringert wird, wenn das empfangene Fernsehsignal einen zweiten Signalwert übersteigt, wenn das empfangene Femsehsignal den zweiten Fernsehsignaltyp enthält, wobei der zweite Signalwert größer als der erste Signalwert ist.

17. Vorrichtung nach Anspruch 16, wobei der erste Femsehsignaltyp ein digitales Fernsehsignal und der zweite Fernsehsignaltyp ein analoges Fernsehsignal enthält.

18. Vorrichtung nach Anspruch 16, mit:
- einem Zwischenfrequenz (ZF)-Tuner (106), der mit dem HF-Tuner (104) und der AGC-Schaltung verbunden ist, zum Empfang eines ZF-Fernsehsignals von dem HF-Tuner, Umsetzung des ZF-Femsehsignals in ein Basisband-Fernsehsignal und Lieferung des Basisband-Femsehsignals zu der dahinterliegenden AGC-Schaltung (108) für eine weitere Videoverarbeitung.

19. Vorrichtung nach Anspruch 16, wobei der HF-Tuner (104) folgendes enthält:
- einen HF-Verstärker (204) zur Verstärkung des empfangenen Fernsehsignals in Abhängigkeit von einem verringerten Wert eines Steuersignals.

20. Vorrichtung nach Anspruch 16, wobei die AGC-Schaltung folgendes enthält:
- eine digitale ZF-Schaltung (214) zur Verringerung des Wertes des Steuersignals, wenn das empfangene Fernsehsignal einen ersten Signalwert übersteigt, wenn das empfangene Fernsehsignal den ersten Fernsehsignaltyp enthält, und
- eine analoge ZF-Schaltung (214) zur Verringerung des Wertes des Steuersignals, wenn das empfangene Fernsehsignal einen zweiten Signalwert übersteigt, wenn das empfangene Fernsehsignal den zweiten Femsehsignaltyp enthält.

21. Vorrichtung nach Anspruch 16, wobei der erste Signalwert einen automatischen Verstärkungssteuerungs (AGC)-Verzögerungspunkt des ersten Fernsehsignaltyps und der zweite Signalwert den AGC-Verzögerungspunkt des zweiten Fernsehsignaltyps darstellt.

22. Vorrichtung nach Anspruch 21, wobei der AGC-Verzögerungspunkt des ersten Fernsehsignaltyps kleiner ist als der AGC-Verzögerungspunkt des zweiten Fernsehsignaltyps.

## Revendications

1. Procédé de traitement d'un signal de télévision reçu comprenant l'un d'un premier type de signal de télévision et d'un second type de signal de télévision, le procédé comportant : l'amplification dudit signal de télévision reçu en réponse à un signal de commande, où ladite amplification se produit quand ledit signal de télévision reçu dépasse un premier niveau de signal (REF. 1) si ledit signal de télévision reçu comporte le premier type de signal de télévision, ladite amplification se produit quand ledit signal de télévision reçu dépasse un second niveau de signal (REF.2) si ledit signal de télévision reçu comporte le second type de signal de télévision, dans lequel ledit second niveau de signal (REF. 2) est supérieur audit premier niveau de signal (REF. 1).

2. Procédé conforme à la revendication 1, dans lequel le premier type de signal de télévision comporte un signal de télévision numérique et le second type de signal de télévision comporte un signal de télévision analogique.

3. Procédé conforme à la revendication 2, dans lequel ledit signal de télévision numérique comporte un signal de télévision haute définition (TVHD) et ledit signal de télévision analogique comporte un signal de télévision NTSC.

4. Procédé conforme à la revendication 1 comportant en outre :
- l'envoi dudit signal de télévision reçu dans le sens descdendant pour un traitement supplémentaire lors de l'amplification dudit signal de télévision reçu.

5. Procédé conforme à la revendication 1 comportant en outre :
- l'amplification dudit signal de télévision reçu jusqu'au premier niveau de signal et avant ladite amplification en réponse audit signal de commande si ledit signal de télévision reçu comporte le premier type de signal de télévision, où ladite amplification jusqu'au premier signal est effectuée à un niveau d'amplification plus élevé que ladite amplification en réponse audit signal de commande.

6. Procédé conforme à la revendication 1 comportant en outre :
- l'amplification dudit signal de télévision reçu jusqu'au second niveau de signal et avant ladite amplification en réponse audit signal de commande si ledit signal de télévision reçu comporte le second type de signal de télévision, où ladite amplification jusqu'au premier niveau de signal est effectuée à un niveau d'amplification plus élevé que ladite amplification en réponse audit signal de commande.

7. Procédé conforme à la revendication 1, dans lequel ledit premier niveau de signal représente un point de retard de commande automatique de gain (CAG) du premier type de signal de télévision et ledit second niveau de signal représente le point de retard CAG du second type de signal de télévision.

8. Procédé conforme à la revendication 7, dans lequel le point de retard CAG du premier type de signal de télévision est inférieur au point de retard CAG du second type de signal de télévision.

9. Procédé conforme à la revendication 1, dans lequel ladite amplification comporte :
- la diminution d'une valeur dudit signal de commande quand ledit signal de télévision reçu dépasse un premier niveau de signal si le signal de télévision reçu comporte le premier type de signal de télévision, où l'amplification se produit en réponse à la valeur réduite dudit signal de commande.

10. Procédé conforme à la revendication 1, dans lequel ladite amplification comporte :
- la diminution d'une valeur dudit signal de commande quand ledit signal de télévision reçu dépasse un second niveau de signal si le signal de télévision reçu comporte
- le second type de signal de télévision, où l'amplification se produit en réponse à la valeur réduite dudit signal de commande.

11. Procédé conforme à la revendication 1, dans lequel ladite amplification comporte :
- la diminution d'un gain d'un syntoniseur radiofréquence (RF) traitant ledit signal de télévision reçu.

12. Procédé conforme à la revendication 11, dans lequel le gain du syntoniseur RF est réduit de façon dynamique selon une estimation du niveau de signal dudit signal de télévision reçu.

13. Procédé conforme à la revendication 12 comportant en outre :
- la mesure d'une valeur dudit signal de commande à partir dudit premier niveau de signal et d'une courbe de gain du syntoniseur RF ; et
- la définition dudit niveau de signal estimé à partir de la valeur dudit signal de commande.

14. Procédé conforme à la revendication 1, dans lequel ledit signal de commande comporte un signal CAG émis à partir d'un circuit CAG de fréquence intermédiaire (FI).

15. Procédé conforme à la revendication 1, dans lequel ladite amplification se produit pour maintenir le niveau de signal dudit signal de télévision amplifié au premier niveau de signal si ledit signal de télévision reçu comporte le premier type de signal de télévision, et ladite amplification se produit pour maintenir le niveau de signal dudit signal de télévision amplifié au second niveau de signal si ledit signal de télévision reçu comporte le second type de signal de télévision.

16. Dispositif de traitement d'un signal de télévision reçu comportant l'un d'un premier type de signal de télévision et d'un second type de signal de télévision, le dispositif comportant :
- un syntoniseur de radiofréquence (RF) (104) pour la réception dudit signal de télévision reçu et l'amplification dudit signal de télévision reçu en réponse à une valeur réduite d'un signal de commande ; et
- un circuit de commande automatique de gain (CAG) (108) couplé audit syntoniseur RF (104), pour ajuster ledit signal de commande audit syntoniseur RF (104), où la valeur dudit signal de commande diminue quand ledit signal de télévision reçu dépasse un premier niveau de signal si ledit signal de télévision reçu comporte le premier type de signal de télévision, la valeur dudit signal de commande diminue quand ledit signal de télévision reçu dépasse un second niveau de signal si le signal de télévision reçu comporte le second type de signal de télévision, dans lequel ledit second niveau de signal est supérieur audit premier niveau de signal.

17. Dispositif conforme à la revendication 16, dans lequel le premier type de signal de télévision comporte un signal de télévision numérique et le second type de signal de télévision comporte un signal de télévision analogique.

18. Dispositif conforme à la revendication 16 comportant en outre :
- un syntoniseur de fréquence intermédiaire (FI) (104), couplé audit syntoniseur RF (104) et audit circuit CAG, pour la réception d'un signal de télévision FI à partir dudit syntoniseur RF, la conversion dudit signal de télévision FI en un signal de télévision en bande de base et la fourniture dudit signal de télévision en bande de base audit circuit CAG (108) et dans le sens descendant pour un traitement vidéo ultérieur.

19. Dispositif conforme à la revendication 16, dans lequel ledit syntoniseur RF (104) comporte :
- un amplificateur RF (204) pour l'amplification dudit signal de télévision reçu en réponse à une valeur réduite d'un signal de commande.

20. Dispositif conforme à la revendication 16, dans lequel ledit circuit CAG comporte :
- un circuit FI numérique (214) pour réduire la valeur dudit signal de commande quand ledit signal de télévision reçu dépasse un premier niveau de signal si ledit signal de télévision reçu comporte le premier type de signal de télévision ; et
- un circuit FI analogique (214) pour réduire la valeur dudit signal de commande quand ledit signal de télévision reçu dépasse un second niveau de signal si le signal de télévision reçu comporte le second type de signal de télévision.

21. Dispositif conforme à la revendication 16, dans lequel ledit premier niveau de signal représente un point de retard de commande automatique de gain (CAG) du premier type de signal de télévision et ledit second niveau de signal représente le point de retard CAG du second type de signal de télévision.

22. Dispositif conforme à la revendication 21, dans lequel le point de retard CAG du premier type de signal de télévision est inférieur au point de retard CAG du second type de signal de télévision.
